# EUROPEAN PATENT SPECIFICATION

(11) **EP 3 451 140 B1**
(45) Date of publication and mention of the grant of the patent: **16.02.2022**
(21) Application number: 18191506.7
(22) Date of filing: 29.08.2018
(51) Int. Cl.: G06F 3/0488, G06F 21/83, G06F 21/53

(54) **METHOD AND SYSTEM FOR SECURE INPUT PROCESSING**
VERFAHREN UND SYSTEM ZUR EINGABEVERARBEITUNG
PROCÉDÉ ET SYSTÈME DE TRAITEMENT D'ÉLÉMENTS SÉCURISÉ

(30) Priority: 30.08.2017 US 201715690627
(43) Date of publication of application: 06.03.2019
(73) Proprietor: VERIFONE, INC., San Jose, CA 95134 (US)
(72) Inventor: MADDEN, Chris Anthony, Dublin (IE); RAMACHANDRA RAO, Manu Prasad, Sunnyvale, CA 94087 (US)
(74) Representative: Leonhard, Frank Reimund

(56) References cited:
- WO-A1-2015/017130
- US-A1- 2012 265 981
- US-B1- 7 328 457

## Description

The present disclosure relates generally to input processing, and, more particularly, to systems, methods, and devices for secure input processing.

WO 2015/017130 A1 is related to a method of encrypting sensor input entries for passcode entry security during payment transactions.

US 7,328,457 B1 discloses methods and devices to prevent interception of data, such as keyboard input data or voice data, when entered into a security software application on a processing device. The interception of data is prevented by inserting application generated insertion data into a message stream by the software application.

US 2012/265981 A1 relates to an electronic device and method to secure user input data by encryption.

Point of sale (POS) and other transaction devices often include a touch-sensitive screen for interacting with customers. During a transaction, a customer may be requested to enter authenticating information, such as a personal identification number (PIN), using the touch-sensitive screen. Although the touch-sensitive screen is capable of receiving the digits of a PIN as gestures (e.g., digital handwriting), a significant amount of processing power is required to interpret the digital handwriting as digits. This is often more than the secure processor that is provided in the POS device.

These and other deficiencies exist. A problem to be solved by the invention is to improve security in processing of a touch-based gesture.

The problem is solved by a method according to claim 1 or by a system according to claim 9.

For a more complete understanding of the present invention, the objects and advantages thereof, reference is now made to the following descriptions taken in connection with the accompanying drawings in which:
Figure 1 depicts a block diagram of a device for secure input processing according to one embodiment;
Figure 2 depicts a block diagram of a system for secure input processing according to one embodiment; and
Figure 3 depicts a method for secure input processing according to one embodiment.

The following descriptions provide different configurations and features according to exemplary embodiments. While certain nomenclature and types of applications/hardware are described, other names and application/hardware usage is possible and the nomenclature provided is done so by way of non-limiting examples only. Further, while particular embodiments are described, it should be appreciated that the features and functions of each embodiment may be combined in any manner within the capability of one of ordinary skill in the art. The figures provide additional exemplary details regarding the present invention. It should also be appreciated that these exemplary embodiments are provided as non-limiting examples only.

Various exemplary methods are provided by way of example herein. These methods are exemplary as there are a variety of ways to carry out methods according to the present disclosure. The methods depicted and described can be executed or otherwise performed by one or a combination of various systems and modules. Each block shown in the methods may represent one or more processes, decisions, methods or subroutines carried out in the exemplary method, and these processes, decisions, methods or subroutines are not necessarily carried out in the specific order outlined in the methods, nor is each of them required.

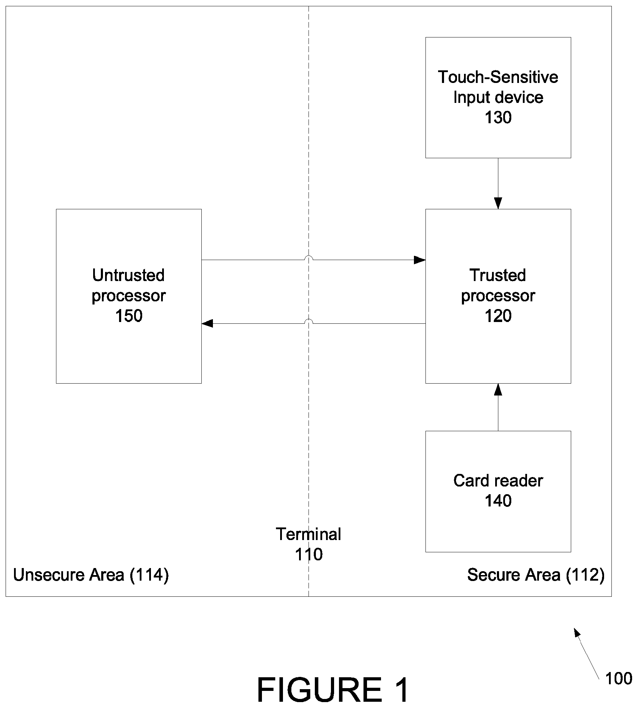

Several embodiments of the present invention and their advantages may be understood by referring to Figures 1-3.

While the embodiments disclosed herein may be made in the context of the entry of an authentication code that includes one or more digits, such as a PIN, it should be recognized that an authentication code may also include numbers, letters, characters, symbols, and/or any other suitable entry.

Referring to Figure 1, a device for secure input processing is disclosed according to one embodiment. Device 100 includes terminal 110, which may be a point of sale device, a kiosk, an ATM, a gas pump, etc. Device 110 includes trusted processor 120, and may in one embodiment include touch-sensitive input device 130, card reader 140, which may be a magnetic stripe reader and/or an EMV card reader, and untrusted processor 150.

In one embodiment, touch-sensitive input device 130 may be a touch-sensitive pad, screen, or display, and may receive an authentication code that is entered by a user using a stylus, the user's finger, etc.

In one embodiment, trusted processor 120 may process sensitive information, such as account numbers, personal identification numbers, etc. Untrusted processor 150 may process unsecure information, such as advertisements, loyalty program offers, inventory tracking, etc.

In one embodiment, trusted processor 120, touch-sensitive input device 130, and card reader 140 may be located within secure area 112 of terminal 110. In one embodiment, secure area 112 may be physically secured using materials (e.g., metals, tamper-resistant materials, tamper-evident materials, etc.) and/or it may be electrically secured.

In one embodiment, untrusted processor 150 may be located in unsecure area 114 of terminal 110. In one embodiment, unsecure area 114 may simply be an area of terminal 110 that does not have some or all of the physical and/or electrical security provided in secure area 112. In another embodiment, untrusted processor 150 may be located remotely from terminal 110, such as in a physically separate device, at a network location, in the cloud, etc.

In one embodiment, both trusted processor 120 and untrusted processor 150 may be located in secure area 112 of terminal 110.

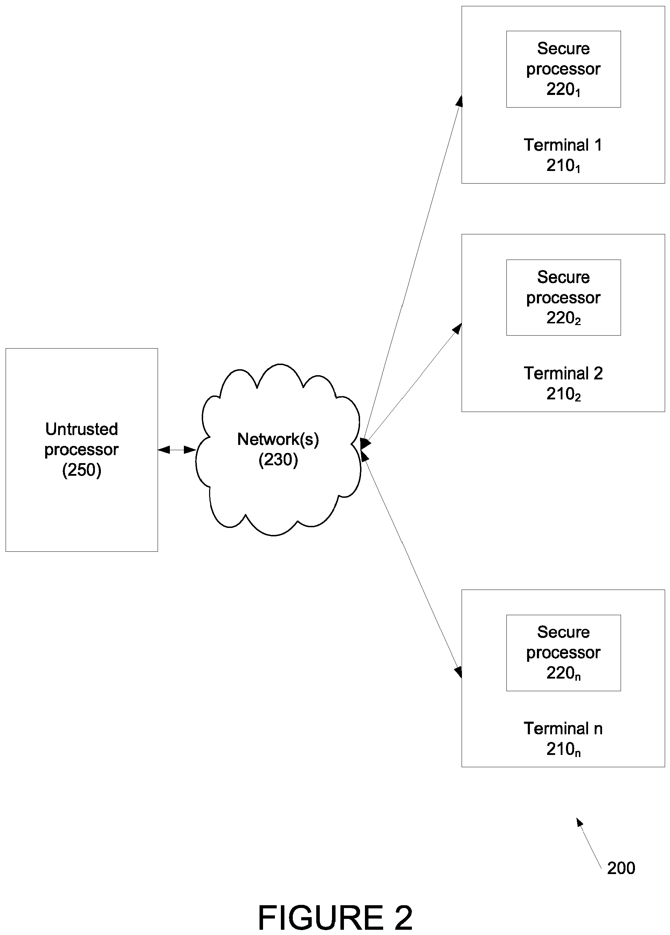

In one embodiment, an untrusted processor may communicate with a plurality of terminals. For example, referring to Figure 2, a system for secure input processing is disclosed according to one embodiment. System 200 may include a plurality of terminals (e.g., 210₁, 210₂, ... 210ₙ) each having a secure processor (e.g., 220₁, 220₂, ... 220ₙ). The plurality of terminals may communicate with untrusted processor 250 over one or more network 230, including any suitable communication networks, payment networks, etc.

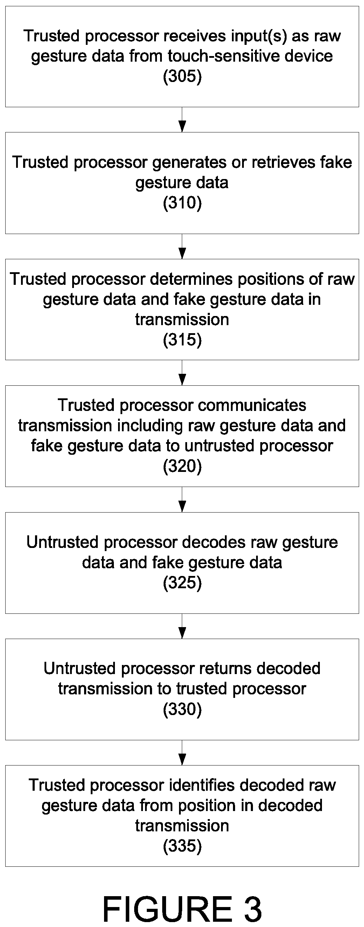

Referring to Figure 3, a method for secure input processing is disclosed according to one embodiment.

In step 305, a trusted processor at a terminal (e.g., point of sale device, kiosk, ATM, gas pump, etc.) receives one or more inputs (e.g., a number, a letter, a character, a symbol, etc.) as raw gesture data. For example, each input may be received as touch-based gesture on a touch-sensitive device using, for example, a stylus, a finger, a fingernail, etc. In one embodiment, the raw gesture data may include data representing, identifying, or indicating the pixels activated or traversed (i.e., the pixels that sensed a touch) during the gesture. The amount of raw gesture data received may depend on the screen sensitivity, such as the pixel density, the width of the gesture, etc.

In one embodiment, the gesture data may be received as a series of X and Y coordinates.

In one embodiment, the raw gesture data may further include pressure data related to the pressure at which the pixel was touched, activated or traversed.

In one embodiment, if there are multiple inputs, the inputs may be received and processed individually (e.g., as each input is processed as it is received), as subsets (e.g., two of four inputs are processed together), or may be received and processed together (e.g., all inputs are processed together).

In step 310, the trusted processor may generate or retrieve fake gesture data for one or more fake inputs. In one embodiment, the fake gesture data may be based, for example, on raw gesture data received during one or more prior interactions. The raw gesture data from a prior user interaction may be used without modification, or it may be modified by an amount (e.g., a predetermined amount, a random amount, a pseudo-random amount, etc.) so that it varies with each use.

In another embodiment, the fake gesture data may be randomly generated.

In still another embodiment, the fake gesture data may be retrieved from a storage location which may be local (e.g., in memory of the terminal) or located remotely (e.g., in the cloud). The retrieved data may be used without modification, or it may be modified by an amount (e.g., a predetermined amount, a random amount, a pseudo-random amount, etc.) so that may vary with each use.

In one embodiment, after the fake gesture data is used a certain number of times, it may be discarded.

In step 315, the trusted processor may select a format for a transmission that will be communicated to the untrusted processor for decoding. For example, the format may vary by the amount of raw gesture data that is included in the transmission (e.g., raw gesture data may be sent one at a time, or may be sent in sets), the amount of fake gesture data that is included in the transmission, the ordering of the raw gesture data and the fake gesture data in the transmission, etc.

In one embodiment, the size of the transmission (e.g., the amount of raw gesture data and fake gesture data) may be fixed (e.g., a total of 8 positions) while the amount of raw gesture data and fake gesture data, and/or the positions within the transmission, may vary. Any suitable format for the transmission (e.g., size, amount of raw gesture data and/or fake gesture data, and positions of raw gesture data and fake gesture data within the transmission) may be used as is necessary and/or desired.

In one embodiment, one or more of the size of the transmission, the amount of raw gesture data and/or fake gesture data, and positions of raw gesture data and fake gesture data within the transmission may be randomly selected or determined. In another embodiment, one or more of the size of the transmission, the amount of raw gesture data and/or fake gesture data, and positions of raw gesture data and fake gesture data within the transmission may change periodically (e.g., change every 5 interactions, every hour, every day, etc.). In another embodiment, one or more of the size of the transmission, the amount of raw gesture data and/or fake gesture data, and positions of raw gesture data and fake gesture data within the transmission may be pseudo-random.

In one embodiment, the size of the transmission and/or the amount of raw gesture data and/or fake gesture data may vary between a minimum and maximum number.

Any other suitable method for selecting the size of the transmission, the amount of raw gesture data and/or fake gesture data, and positions of raw gesture data and fake gesture data within the transmission may be used as is necessary and/or desired.

For example, in a transmission of eight positions, the first position may include fake gesture data, the second position may include raw gesture data, the third position may include raw gesture data, the fourth position may include fake gesture data, the fifth position may include fake gesture data, the sixth position may include raw gesture data, the seventh position may include fake gesture data, and the eighth position may include raw gesture data. Note that this is illustrative only, and a greater/fewer number of positions in the transmission may be used, a greater/fewer number of fake gesture data may be included, a greater/fewer number of raw gesture data may be included, and the positions of the raw gesture data and the fake gesture data may vary as is necessary and/or desired.

In one embodiment, the order of the raw gesture data in the transmission may be different from the order in which the raw gesture data is received.

The trusted processor may maintain at least the position(s) of the raw gesture data in the transmission so that it can extract the decoded raw gesture data from the decoded transmission received from the untrusted processor when it is returned. In one embodiment, the trusted processor may store the position(s) of the raw gesture data in memory. In another embodiment, the trusted processor may include an identifier that may be returned when the raw gesture data and the fake gesture data is decoded so that it can identify the raw gesture data. In yet another embodiment, the trusted processor may tag or associate the raw gesture data with an identifier. Any other suitable method for identifying the decoded raw gesture data may be used as is necessary and/or desired.

The trusted processor may then generate a transmission and place the raw gesture data and the fake gesture data in the transmission based on the selected size of the transmission, the amount of raw gesture data and/or fake gesture data, and positions of raw gesture data and fake gesture data.

In step 320, the trusted processor communicates the transmission including the raw gesture data and the fake gesture data to the untrusted processor for decoding. The untrusted processor does not know which positions in the transmission have raw gesture data or fake gesture data, and nothing in the transmission indicates which data is raw gesture data and which is fake gesture data.

In step 325, the untrusted processor may decode both the fake gesture data and the raw gesture data from the transmission. In one embodiment, the untrusted processor may decode the data in the transmission in a first in, first out, manner. Thus, the order of the data in the transmission may not change.

In step 330, the trusted processor receives the decoded transmission.

The decoded transmission includes decoded raw gesture data and decoded fake gesture data.

In step 335, the trusted processor identifies the positions(s) corresponding to the raw gesture data. The decoded transmission may be reordered (if necessary) and some or all of the decoded raw gesture data may be used to authenticate the user and/or a transaction.

In one embodiment, the decoded fake gesture data may be ignored or discarded.

In one embodiment, if additional inputs are required, the process may be repeated.

In another embodiment, each input may be processed as it is received. For example, after a first input is received, the raw gesture data for the first input may be communicated to the untrusted processor in a transmission containing fake gesture data as discussed above.

With each subsequent input, the process may be repeated.

In one embodiment, the raw gesture data may be stored to memory and may be used as, or as a basis for generating, fake gesture data in a subsequent interaction or as necessary and/or desired.

Although multiple embodiments are disclosed, it should be recognized that these embodiments are not exclusive to one another, and features of one embodiment may be applied to the others as is necessary and/or desired.

## Claims

1. **Method** for securely processing a touch-based gesture, comprising:
a secure computer processor (120, 220ₙ) receiving (305) a plurality of raw gesture data, each corresponding to a touch input;
the secure computer processor (120, 220ₙ) selecting (315) a position for each of the plurality of raw gesture data and a position for each of a plurality of fake gesture data in a transmission;
the secure computer processor (120, 220ₙ) communicating (320) the transmission to an untrusted computer processor (150, 250);
the secure computer processor (120, 220ₙ) receiving (330) a decoded transmission from the untrusted computer processor (150, 250) comprising a plurality of decoded raw gesture data corresponding to the plurality of raw gesture data and a plurality of decoded fake gesture data corresponding to the plurality of fake gesture data; and
the secure computer processor (120, 220ₙ) identifying (335) each of the plurality of the decoded raw gesture data as corresponding to each of the plurality of the raw gesture data based on a position of each of the plurality of the decoded raw gesture data in the decoded transmission.

2. Method of claim 1, wherein the positions for the plurality of raw gesture data and the positions for the plurality of fake gesture data are selected randomly.

3. Method of claim 1, wherein the positions for the plurality of raw gesture data and the positions for the plurality of fake gesture data are selected based on positions for different raw gesture or different fake gesture data in a prior transmission.

4. Method of claim 1, wherein the secure processor (120, 220ₙ) is provided in a first electronic device, and the untrusted processor is provided in a second electronic device.

5. Method of claim 1, wherein the secure processor (120, 220ₙ) is provided in the first electronic device, and the untrusted processor (150, 250) is a cloud-based processor.

6. Method of claim 1, wherein at least one of the plurality of fake gesture data is randomly generated.

7. Method of claim 1, wherein at least one of the plurality of fake gesture data comprises a raw gesture data from a prior interaction.

8. Method of claim 1, wherein a number of fake gesture data is selected randomly.

9. **System** for securely processing a touch-based gesture, comprising:
a terminal (110) comprising a secure computer processor (120,220ₙ); and
an untrusted computer processor (150,250) in communication with the secure computer processor (120,220ₙ);
wherein:
the secure computer processor (120,220ₙ) is configured to receive (305) a plurality of raw gesture data, each corresponding to a touch input;
the secure computer processor (120,220ₙ) is configured to select a position for each of the plurality of raw gesture data and a position for each of a plurality of fake gesture data in a transmission;
the secure computer processor (120,220ₙ) is configured to communicate (320) the transmission to the untrusted computer processor (150,250);
the secure computer processor (120,220ₙ) is configured to receive (330) a decoded transmission from the untrusted computer processor (150,250) comprising a plurality of decoded raw gesture data corresponding to the plurality of raw gesture data and a plurality of decoded fake gesture data corresponding to the plurality of fake gesture data; and
the secure computer processor (120,220ₙ) is configured to identify each of the plurality of the decoded raw gesture data as corresponding to each of the plurality of the raw gesture data based on a position of each of the plurality of the decoded raw gesture data in the decoded transmission.

10. System of claim 9, wherein the plurality of raw gesture data is receivable from a touch-sensitive input device (130).

11. System of claim 9, wherein the positions for the plurality of raw gesture data and the positions for the plurality of fake gesture data are selected randomly or are selected based on a prior position for at least one of the raw gesture data and the fake gesture data.

12. System of claim 9, wherein the untrusted processor is a cloud-based processor.

13. System of claim 9, wherein the positions for the plurality of raw gesture data and the positions for the plurality of fake gesture data are selected based on positions for different raw gesture or different fake gesture data in a prior transmission.

14. System of claim 9, wherein at least one of the plurality of fake gesture data is randomly generated.

15. System of claim 9, wherein at least one of the plurality of fake gesture data comprises a raw gesture data from a prior interaction.

## Patentansprüche

1. **Verfahren** zur sicheren Verarbeitung einer berührungsbasierten Geste, umfassend
einen sicheren Computerprozessor (120, 220n), der eine Vielzahl von rohen Gestendaten empfängt (305), die jeweils einer Berührungseingabe entsprechen;
der sichere Computerprozessor (120, 220n) wählt (315) eine Position für jede der Mehrzahl von rohen Gestendaten und eine Position für jede einer Mehrzahl von gefälschten Gestendaten in einer Übertragung;
der sichere Computerprozessor (120, 220n) übermittelt (320) die Übertragung (transmission) an einen nicht vertrauenswürdigen Computerprozessor (150, 250);
der sichere Computerprozessor (120, 220n) empfängt (330) eine dekodierte Übertragung von dem nicht vertrauenswürdigen Computerprozessor (150, 250), die eine Vielzahl von dekodierten rohen Gestendaten umfasst, die der Vielzahl von rohen Gestendaten entsprechen und eine Vielzahl von dekodierten gefälschten Gestendaten umfasst, die der Vielzahl von gefälschten Gestendaten entsprechen; und
der sichere Computerprozessor (120, 220n) identifiziert (335) jede aus der Vielzahl der dekodierten rohen Gestendaten als jede aus der Vielzahl der rohen Gestendaten entsprechend, basierend auf einer Position von jeder aus der Vielzahl der dekodierten rohen Gestendaten in der dekodierten Übertragung.

2. Verfahren nach Anspruch 1, bei dem die Positionen für die Vielzahl von Gestenrohdaten und die Positionen für die Vielzahl von gefälschten Gestendaten zufällig ausgewählt werden.

3. Verfahren nach Anspruch 1, wobei die Positionen für die Vielzahl von Gesten-Rohdaten und die Positionen für die Vielzahl von Gesten-Fälschungsdaten auf der Grundlage von Positionen für verschiedene Gesten-Rohdaten oder verschiedene Gesten-Fälschungsdaten in einer vorherigen Übertragung ausgewählt werden.

4. Verfahren nach Anspruch 1, wobei der sichere Prozessor (120, 220n) in einem ersten elektronischen Gerät vorgesehen ist und der nicht vertrauenswürdige Prozessor in einem zweiten elektronischen Gerät vorgesehen ist.

5. Verfahren nach Anspruch 1, wobei der sichere Prozessor (120, 220n) in der ersten elektronischen Vorrichtung vorgesehen ist und der nicht vertrauenswürdige Prozessor (150, 250) ein Cloud-basierter Prozessor ist.

6. Verfahren nach Anspruch 1, wobei mindestens eine der mehreren gefälschten Gestendaten zufällig erzeugt wird.

7. Verfahren nach Anspruch 1, wobei mindestens eine der mehreren gefälschten Gestendaten eine rohe Geste (raw gesture data) aus einer früheren Interaktion umfasst.

8. Verfahren nach Anspruch 1, wobei eine Anzahl von gefälschten Gestendaten zufällig ausgewählt wird.

9. **System** zur sicheren Verarbeitung einer berührungsbasierten Geste, das Folgendes umfasst:
ein Endgerät (Terminal, 110) mit einem sicheren Computerprozessor (120, 220n); und
einen nicht vertrauenswürdigen (untrusted) Computerprozessor (150, 250) in Kommunikation mit dem sicheren Computerprozessor (120, 220n);
wobei:
der sichere Computerprozessor (120, 220n) so konfiguriert ist, dass er eine Vielzahl von rohen Gestendaten empfängt (305), die jeweils einer Berührungseingabe (touch input) entsprechen;
der sichere Computerprozessor (120, 220n) so konfiguriert ist, dass er eine Position für jede der Vielzahl von rohen Gestendaten und eine Position für jede einer Vielzahl von gefälschten Gestendaten in einer Übertragung auswählt;
der sichere Computerprozessor (120, 220n) so konfiguriert ist, dass er die Übertragung (transmission) an den nicht vertrauenswürdigen Computerprozessor (150, 250) übermittelt (320);
der sichere Computerprozessor (120, 220n) so konfiguriert ist, dass er eine dekodierte Übertragung (transmission) von dem nicht vertrauenswürdigen Computerprozessor (150, 250) empfängt (330), die eine Vielzahl von dekodierten Rohgestendaten (raw gesture data), die der Vielzahl von Rohgestendaten entsprechen, und eine Vielzahl von dekodierten gefälschten Gestendaten, die der Vielzahl von gefälschten Gestendaten entsprechen, umfasst; und
der sichere Computerprozessor (120, 220n) so konfiguriert ist, dass er jede aus der Vielzahl der dekodierten rohen Gestendaten als jede aus der Vielzahl der rohen Gestendaten entsprechend identifiziert, basierend auf einer Position jeder aus der Vielzahl der dekodierten rohen Gestendaten in der dekodierten Übertragung.

10. System nach Anspruch 9, wobei die Vielzahl von Rohdaten für Gesten von einer berührungsempfindlichen Eingabevorrichtung (130) empfangen werden kann.

11. System nach Anspruch 9, wobei die Positionen für die Vielzahl von Gesten-Rohdaten und die Positionen für die Vielzahl von gefälschten Gestendaten zufällig ausgewählt werden oder auf der Grundlage einer vorherigen Position für mindestens eine der Gesten-Rohdaten und der gefälschten Gestendaten ausgewählt werden.

12. System nach Anspruch 9, wobei der nicht vertrauenswürdige Prozessor ein Cloud-basierter Prozessor ist.

13. System nach Anspruch 9, wobei die Positionen für die mehreren Gesten-Rohdaten und die Positionen für die mehreren gefälschten Gestendaten auf der Grundlage von Positionen für verschiedene Gesten-Rohdaten oder verschiedene gefälschte Gestendaten in einer vorherigen Übertragung ausgewählt werden.

14. System nach Anspruch 9, wobei mindestens eine der mehreren gefälschten Gestendaten zufällig erzeugt wird.

15. System nach Anspruch 9, wobei mindestens eine der mehreren gefälschten Gestendaten Rohgestendaten (raw gesture data) aus einer früheren Interaktion umfasst.

## Revendications

1. **Procédé** de traitement sécurisé d'un geste tactile, comprenant :
un processeur informatique sécurisé (120, 220n) recevant (305) une pluralité de données gestuelles brutes, chacune correspondant à une entrée tactile ;
le processeur informatique sécurisé (120, 220n) sélectionne (315) une position pour chacune de la pluralité de données gestuelles brutes et une position pour chacune d'une pluralité de données gestuelles factices dans une transmission ;
le processeur informatique sécurisé (120, 220n) communiquant (320) la transmission à un processeur informatique non sécurisé (150, 250) ;
le processeur informatique sécurisé (120, 220n) recevant (330) une transmission décodée du processeur informatique non sécurisé (150, 250) comprenant une pluralité de données gestuelles brutes décodées correspondant à la pluralité de données gestuelles brutes et une pluralité de données gestuelles fausses décodées correspondant à la pluralité de données gestuelles fausses ; et
le processeur informatique sécurisé (120, 220n) identifiant (335) chacune de la pluralité des données gestuelles brutes décodées comme correspondant à chacune de la pluralité des données gestuelles brutes sur la base d'une position de chacune de la pluralité des données gestuelles brutes décodées dans la transmission décodée.

2. Procédé de la revendication 1, dans lequel les positions de la pluralité de données gestuelles brutes et les positions de la pluralité de données gestuelles factices sont sélectionnées de manière aléatoire.

3. Procédé de la revendication 1, dans lequel les positions pour la pluralité de données de gestes bruts et les positions pour la pluralité de données de gestes faux sont sélectionnées sur la base de positions pour des données de gestes bruts différents ou des données de gestes faux différents dans une transmission antérieure.

4. Procédé de la revendication 1, dans lequel le processeur sécurisé (120, 220n) est prévu dans un premier dispositif électronique, et le processeur non sécurisé est prévu dans un second dispositif électronique.

5. Procédé de la revendication 1, dans lequel le processeur sécurisé (120, 220n) est fourni dans le premier dispositif électronique, et le processeur non sécurisé (150, 250) est un processeur basé sur le nuage.

6. Procédé de la revendication 1, dans lequel au moins l'une de la pluralité de données de gestes factices est générée de manière aléatoire.

7. Procédé de la revendication 1, dans lequel au moins l'une de la pluralité de données gestuelles fausses comprend des données gestuelles brutes provenant d'une interaction antérieure.

8. Procédé de la revendication 1, dans lequel un nombre de données de gestes faux est sélectionné de manière aléatoire.

9. **Système** pour traiter de manière sécurisée un geste tactile, comprenant :
un terminal (110) comprenant un processeur informatique sécurisé (120, 220n) ; et
un processeur informatique non sécurisé (150, 250) en communication avec le processeur informatique sécurisé (120, 220n) ;
dans lequel :
le processeur informatique sécurisé (120, 220n) est configuré pour recevoir (305) une pluralité de données gestuelles brutes, chacune correspondant à une entrée tactile ;
le processeur informatique sécurisé (120, 220n) est configuré pour sélectionner une position pour chacune de la pluralité de données gestuelles brutes et une position pour chacune d'une pluralité de données gestuelles factices dans une transmission ;
le processeur informatique sécurisé (120, 220n) est configuré pour communiquer (320) la transmission au processeur informatique non sécurisé (150, 250) ;
le processeur informatique sécurisé (120, 220n) est configuré pour recevoir (330) une transmission décodée du processeur informatique non sécurisé (150, 250) comprenant une pluralité de données gestuelles brutes décodées correspondant à la pluralité de données gestuelles brutes et une pluralité de données gestuelles fausses décodées correspondant à la pluralité de données gestuelles fausses ; et
le processeur informatique sécurisé (120, 220n) est configuré pour identifier chacune de la pluralité des données gestuelles brutes décodées comme correspondant à chacune de la pluralité des données gestuelles brutes sur la base d'une position de chacune de la pluralité des données gestuelles brutes décodées dans la transmission décodée.

10. Système de la revendication 9, dans lequel la pluralité de données gestuelles brutes peut être reçue d'un dispositif d'entrée sensible au toucher (130).

11. Système de la revendication 9, dans lequel les positions pour la pluralité de données de gestes bruts et les positions pour la pluralité de données de gestes faux sont sélectionnées de manière aléatoire ou sont sélectionnées sur la base d'une position antérieure pour au moins l'une des données de gestes bruts et des données de gestes faux.

12. Système de la revendication 9, dans lequel le processeur non fiable est un processeur basé sur le cloud.

13. Système de la revendication 9, dans lequel les positions pour la pluralité de données de gestes bruts et les positions pour la pluralité de données de gestes faux sont sélectionnées sur la base de positions pour des données de gestes bruts différents ou des données de gestes faux différents dans une transmission antérieure.

14. Système de la revendication 9, dans lequel au moins l'une de la pluralité de données de gestes factices est générée de manière aléatoire.

15. Système de la revendication 9, dans lequel au moins l'une de la pluralité de données gestuelles fausses comprend des données gestuelles brutes provenant d'une interaction antérieure.
